Europäisches Patentamt

(19) **European Patent Office**

Office européen des brevets

(11) Publication number: **0 211 579**
**B1**

(12) # EUROPEAN PATENT SPECIFICATION

(45) Date of publication of the patent specification:
28.03.90

(51) Int. Cl.⁴: **C04B 41/85,** C04B 35/58,
C23C 4/10

(21) Application number: **86305717.0**

(22) Date of filing: **25.07.86**

(54) **Method of making a silicon nitride sintered member.**

(30) Priority: **02.08.85 JP 169792/85**
**26.09.85 JP 213493/85**

(43) Date of publication of application:
**25.02.87 Bulletin 87/9**

(45) Publication of the grant of the patent:
**28.03.90 Bulletin 90/13**

(84) Designated Contracting States:
**DE FR GB IT SE**

(56) References cited:
**DE-B- 1 058 422**
**GB-A- 1 560 793**
**JP-A-56 155 080**
**JP-A-57 051 178**

(73) Proprietor: **NGK INSULATORS, LTD., 2-56, Suda-cho, Mizuho-ku, Nagoya-shi, Aichi 467(JP)**

(72) Inventor: **Matsui, Minoru, 93 Yashirodal 1-chome Meito-Ku, Nagoya City Aichi Pref.(JP)**
Inventor: **Takahashi, Tomonori, 85-2 Aza-Kitabatake Shinmaiko, Chita City Aichi Pref.(JP)**

(74) Representative: **Paget, Hugh Charles Edward et al, MEWBURN ELLIS & CO. 2/3 Cursitor Street, London EC4A 1BQ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method of making a silicon nitride sintered member.

Since silicon nitride sintered members are better than other inorganic materials or metals in terms of mechanical strength, thermal resistance, thermal shock resistance, corrosion resistance, etc. at high temperatures, their use as high temperature structural members has been examined, and is actively being developed.

However, silicon nitride sintered members have a shortcoming that they have high thermal conductivity and therefore provide poor heat insulation. For instance, when a silicon nitride sintered member is used at a wall face of an engine combustion chamber to enhance thermal resistance, heat insulation to the exterior can be improved by an air gap etc., but proper intake gas density cannot be obtained because the thermal conductivity is high and therefore the intake gas is warmed. In that case, the high thermal conductivity near the surface of the silicon nitride sintered member becomes a problem.

It is disclosed in Japanese patent applications Laid-Open Nos. 55-28, 351, 57-140, 876 and 58-87, 273 that the surface of a metal substrate may be coated with zirconia by plasma spraying, with the aim of improvement of the thermal resistance, corrosion resistance and wear resistance. Further, in Japanese patent applications Laid-Open Nos. 57-135, 771 and 58-125, 679 it is described that the surface of a substrate of carbon is coated with zirconia.

In such a technique, a cermet, platinum or Ni base alloy is used as an intermediate layer for strengthening the bonding force of the zirconia layer. However, it is not suggested that a silicon nitride sintered body should be used as a substrate, nor that thermal insulation near the surface thereof is intended to be improved.

As compared with a silicon nitride sintered body, zirconia has a lower thermal conductivity and a better thermal insulation property, but it has a defect that it is lower in mechanical strength at high temperatures.

JP-A-57-51178 describes a container for a molten light metal such as Al or Zn. A silicon nitride or silicon carbide substrate of high porosity is coated with zirconia to reduce the porosity. A thickness of 100 μm to 3 mm for the coating is suggested. JP-A-56-155080 is concerned with cutting tools of silicon nitride, with an alumina or zirconia coating to prevent reaction of the silicon nitride with copper being machined. To improve adhesion of the coating, an intermediate layer of a boride, carbide, nitride etc. is provided.

The present invention is aimed at solving the above-mentioned drawbacks.

The invention is set out in claim 1.

The zirconia-coated silicon nitride sintered member produced by the present invention has both high strength at high temperatures and excellent heat insulating property.

The silicon nitride sintered member produced by this invention may be a structural member, such as an engine part, made of a silicon nitride pressureless sintered body, a hot press sintered body, an HIP sintered body or a reaction sintered body. Although the silicon nitride sintered member may contain various additives such as MgO, Al₂O₃ or Y₂O₃, the additives are not essential in improving the thermal insulating property of the silicon nitride sintered body.

Use may be made of zirconia containing one or more additives, preferably not more than 30 weight % thereof. The zirconia may for example be fully or partially stabilized with Y₂O₃, MgO or CaO. The thickness of the zirconia layer is not more than 100 μm. This is because when the thickness of the zirconia layer is too large, peeling or penetration is likely to occur through repetition of heating and cooling due to difference in coefficient of thermal expansion between the silicon nitride sintered body and zirconia and also because even the 100 μm or less thickness is sufficient to effectively reduce thermal conductivity near the surface of the silicon nitride sintered member.

Next, some methods of producing the silicon nitride sintered member having a surface coated with zirconia according to the present invention will be described.

The whole or part of the surface of the silicon nitride sintered member is coated with zirconia by applying or spraying a zirconia slurry onto the surface to form a zirconia layer, followed by firing, or more preferably by coating zirconia onto the surface of the silicon nitride sintered body through plasma spraying.

The surface of the silicon nitride sintered body is generally a fired surface or a machined surface. Thus, in order to increase the bonding force between the zirconia slurry-applied layer or plasma sprayed layer and the surface of the silicon nitride sintered body, a surface treatment is performed for roughening or activation. For instance, such surface treatments are polishing with abrasive grits to render the surface coarse, oxidizing by heating in air and etching with fluoric acid. The optimum method of surface treatment for roughening and activation depends upon the quality of the silicon nitride and sintered body and can be ascertained in each case. Then, zirconia is coated on or plasma sprayed onto the surface of the silicon nitride sintered body which has undergone the surface treatment. As the zirconia coating raw material or a zirconia plasma spraying raw material, use may be made of fully or partially stabilized zirconia. Alternatively, fully or partially stabilized zirconia may be formed by reacting zirconia and a stabilizer during firing or plasma spraying. An intermediate layer having an intermediate coefficient of thermal expansion may be preliminarily formed on the surface of the silicon nitride sintered body so that the risk of peeling and penetration due to difference in coefficient of thermal expansion between the silicon nitride sintered body and the stabilized zirconia is reduced or avoided.

In the following, examples of the present invention are given, by way of illustration, and should not be interpreted to limit the scope of the invention.

In the Tables, "24 weight % MgO-ZrO₂" means zirconia containing 24 weight % MgO, etc.

Example 1

A disc of 10 mm in diameter and 3 mm thick machined from a silicon nitride pressureless sintered body containing SrO, MgO, CeO₂ and ZrO₂ as additives was oxidized at 1,200°C in air for 24 hours to form an oxidized layer on the surface thereof, thereby obtaining a substrate to be plasma sprayed. A flame sprayed agent as set out in Table 1 was plasma sprayed onto one surface of the substrate to a thickness of 50 to 70 μm, thereby obtaining Samples 1, 2 and 3 of silicon nitride sintered members produced according to the present invention which were to be subjected to measurement of the thermal conductivity. The thermal conductivities of Samples 1, 2 and 3 and Comparative Example 4 in which the substrate was not coated with zirconia were measured at room temperature and at 800°C according to a laser flash method, and the results are shown in Table 1. The measurement of the thermal conductivities of Samples 1, 2 and 3 according to the laser flash method was performed by irradiating the coated surface with the laser beams.

## Table 1

| | Sample No. | Flame-sprayed agent | Thermal conductivity (cal/cm·sec·°C) | |
|---|---|---|---|---|
| | | | Room temperature | 800°C |
| Present invention | 1 | 24 weight % MgO-ZrO₂ | 0.03 | 0.03 |
| | 2 | 20 weight % Y₂O₃-ZrO₂ | 0.03 | 0.02 |
| | 3 | 5 weight % CaO-ZrO₂ | 0.03 | 0.03 |
| Comparative Example | 4 | No coating | 0.07 | 0.05 |

Samples 1, 2 and 3 according to the present invention suffered no peeling or penetration even after repetition of heating and cooling between room temperature and 1,200°C 20 times.

Example 2

A disc of 10 mm in diameter and 3 mm thick machined from a silicon nitride pressureless sintered body containing Y₂O₃, MgO and CeO₂ as additives was immersed in conc. hydrofluoric acid at 50°C for 1 hour to perform etching of the surface thereof, thereby obtaining a substrate to be plasma sprayed. A flame spraying agent in Table 2 was plasma sprayed onto one surface of the substrate to a thickness of 50 to 70 μm, thereby obtaining Samples 5 and 6 of silicon nitride sintered members produced according to the present invention to be used for the thermal conductivity measurement. The thermal conductivities of Samples 5 and 6 and Comparative Example 7 in which a substrate was not coated with zirconia were measured by the same method as in Example 1, and measurement results are shown in Table 2.

## Table 2

| | Sample No. | Flame-sprayed agent | Thermal conductivity (cal/cm·sec·°C) | |
|---|---|---|---|---|
| | | | Room temperature | 800°C |
| Present invention | 5 | 24 weight % MgO-ZrO$_2$ | 0.03 | 0.02 |
| | 6 | 20 weight % Y$_2$O$_3$-ZrO$_2$ | 0.03 | 0.02 |
| Comparative Example | 7 | No ZrO$_2$ coating | 0.07 | 0.04 |

Samples 5 and 6 according to the present invention also suffered no peeling or penetration even after repetition of heating and cooling between room temperature and 1,200°C for 20 times.

Example 3

A disc of 10 mm in diameter and 3 mm thick machined from a silicon nitride hot press sintered body containing MgO as an additive was polished with #400 SiC abrasive grits to render the surface coarse, thereby obtaining a substrate ready for slurry application. A slurry in which the slurry-applied agent given in Table 3 and polyvinyl alcohol as a binder were suspended in water was applied onto one surface of the substrate, which was dried and heated at 1,500°C in a nitrogen atmosphere for 1 hour to form a fired layer of 90-100 μm thick, thereby obtaining Samples 8 and 9 of silicon nitride sintered members according to the present invention for the thermal conductivity measurement. The thermal conductivities of Samples 8 and 9 and Comparative Example 10 in which a substrate was not coated with zirconia were measured by the same method as in Example 1, and measurement results are shown in Table 3.

## Table 3

| | Sample No. | Slurry-applied agent | Thermal conductivity (cal/cm·sec·°C) | |
|---|---|---|---|---|
| | | | Room temperature | 800°C |
| Present invention | 8 | 24 weight % MgO-ZrO$_2$ | 0.04 | 0.03 |
| | 9 | 20 weight % Y$_2$O$_3$-ZrO$_2$ | 0.04 | 0.03 |
| Comparative Example | 10 | No ZrO$_2$ coating | 0.08 | 0.06 |

Samples 8 and 9 according to the present invention suffered no peeling or penetration even after repetition of heating and cooling between room temperature and 1,200°C 20 times.

As shown in Tables 1, 2 and 3, the silicon nitride sintered members according to the present invention in which the surface of substrate is coated with zirconia through plasma spraying or slurry-applying have low thermal conductivities and an excellent heat insulating property.

As explained in the foregoing, the silicon nitride sintered member produced according to the present invention in which the surface of the substrate is coated with zirconia possesses both high temperature strength of the silicon nitride sintered body and the heat insulating property of zirconia in combination. Thus, the thermal resistance and the heat insulating property can be simultaneously improved by application of the silicon nitride sintered member as high temperature structural members, e.g. as engine parts.

## Claims

1. A method of making a silicon nitride sintered member having reduced thermal conductivity, comprising applying to a surface of a silicon nitride sintered body a heat insulating surface layer consiting essentially of zirconia and having a thickness of not more than 100 μm, wherein prior to the formation of the heat insulating surface layer said surface of said silicon nitride sintered body is pre-treated by a treatment selected from the group consisting of polishing with abrasive grit to render the surface coarse, oxidizing under heating in air and etching with hydrofluoric acid.

2. A method according to claim 1, wherein said zirconia layer is formed on the surface of the silicon nitride sintered body by plasma spraying.

3. A method according to claim 1 or claim 2 wherein the zirconia is stabilized or partially stabilized zirconia.

4. An engine part which is a silicon nitride sintered member made according to any one of claims 1 to 3.

## Patentansprüche

1. Verfahren zur Herstellung eines Bauelements aus gesintertem Siliciumnitrid mit einer verminderten Wärmeleitfähigkeit, das umfaßt das Aufbringen einer wärmeisolierenden Oberflächenschicht, die im wesentlichen aus Zirkoniumdioxid besteht und eine Dicke von nicht mehr als 100 μm hat, auf eine Oberfläche eines Siliciumnitrid-Sinterkörpers, wobei diese Oberfläche des Siliciumnitrid-Sinterkörpers vor der Erzeugung der wärmeisolierenden Oberflächenschicht vorbehandelt wird durch Polieren mit Schleifkorn, um die Oberfläche aufzurauhen, Oxidieren unter Erhitzen an der Luft und/oder Ätzen mit Fluorwasserstoffsäure.

2. Verfahren nach Anspruch 1, bei dem die Zirkoniumdioxid-Schicht auf der Oberfläche des Siliciumnitrid-Sinterkörpers durch Plasmaspritzen erzeugt wird.

3. Verfahren nach Anspruch 1 oder 2, bei dem das Zirkoniumdioxid stabilisiertes oder teilweise stabilisiertes Zirkoniumdioxid ist.

4. Motorteil, bei dem es sich um ein Bauelement aus gesintertem Siliciumnitrid handelt, das nach einem der Ansprüche 1 bis 3 hergestellt worden ist.

**Revendications**

1. Procédé de fabrication d'un organe fritté en nitrure de silicium ayant une conductivité thermique réduite, consistant à appliquer, à une surface d'un corps fritté en nitrure de silicium, une couche de surface d'isolement à la chaleur consistant essentiellement en zircone et ayant une épaisseur ne dépassant pas 100 µm, où avant la formation de la couche de surface d'isolement à la chaleur, ladite surface dudit corps fritté en nitrure de silicium est prétraitée par un traitement choisi dans le groupe consistant en polissage avec des particules abrasives pour rendre la surface grossière, oxydation avec chauffage à l'air et attaque avec de l'acide fluorhydrique.

2. Procédé selon la revendication 1, où ladite couche de zircone est formée à la surface du corps fritté en nitrure de silicium par pulvérisation au plasma.

3. Procédé selon la revendication 1 ou la revendication 2, où la zircone est de la zircone stabilisée ou partiellement stabilisée.

4. Pièce de moteur qui est un organe fritté en nitrure de silicium selon l'une quelconque des revendications 1 à 3.